# EUROPEAN PATENT APPLICATION

(11) **EP 4 574 560 A1**
(43) Date of publication of application: **25.06.2025**
(21) Application number: 23218589.2
(22) Date of filing: 20.12.2023
(51) Int. Cl.: B60N 2/28, B60N 2/42, B60R 21/207

(54) **A CHILD SEAT WITH A SAFETY SYSTEM, AN INFLATABLE AIRBAG ARRANGEMENT AND THE USE OF SUCH ARRANGEMENT IN A CHILD SEAT**

(71) Applicant: Autoliv Development AB, 447 83 Vårgårda (SE)
(72) Inventor: Przybysz, Lukasz, 55-200 Olawa (PL); Kedzierski, Mateusz, 55-200 Olawa (PL)
(74) Representative: AWA Sweden AB

(57) **Abstract**

A child seat with a safety system is provided. The safety system comprises an inflator (111), an inflatable airbag (110), and a pair of guiding members (113). The pair of guiding members (113) are arranged in a respective side wall portion (102) of a seat back (101) of the child seat (100). Two opposing end portions of the airbag are slidingly connected to a respective guiding member (113) such that the airbag (110) is allowed to perform a sliding action along the pair of guiding members (113) upon the inflation of the airbag (110). The invention also refers to an inflatable airbag arrangement (1) and the use of such arrangement in a child seat.

## Description

### Technical field

The present invention refers to a child seat with a safety system, an inflatable airbag arrangement and the use of such arrangement in a child seat.

### Technical background

During a collision event with a vehicle, there is a risk of loose items within the vehicle becoming harmful projectiles due to the large accelerations associated with vehicle collisions. These accelerations can reach up to twenty times the force of gravity, meaning that a simple water bottle for example, weighing 500 grams, could achieve an equivalent weight of 10 kg due to these accelerations. This is comparable to the weight of a bowling ball. Since loose items in vehicles are virtually unavoidable, there is a need for safety devices mitigating the risk of injury to passengers due to loose items in the event of a collision. This is especially the case for children in child seats where the child seats often are mounted in a rearward position. The present application provides a solution for protecting passengers from loose items in the event of a collision.

### Summary

It is an object of the present invention to provide a child seat with a safety system for protecting an occupant of the child seat from loose items in the event of a collision.

Another object is to provide a child seat wherein the upper body and particularly the head of a seated occupant is protected from loose items.

Yet another object is to provide a safety system that provides a protection from loose items having an anterior or a posterior trajectory, or loose items having a lateral trajectory.

Another object is to provide an inflatable airbag arrangement to be used in a child seat.

According to one aspect of the invention, there is provided a child seat with a safety system comprising: an inflator; an inflatable airbag; and a pair of guiding members;
wherein the pair of guiding members are arranged in a respective side wall portion of a seat back of the child seat, and wherein two opposing end portions of the airbag are slidingly connected to a respective guiding member such that the airbag is allowed to perform a sliding action along the pair of guiding members upon the inflation of the airbag.

Accordingly, a child seat with a safety system is provided where the airbag upon inflation is slidingly guided along a pair of guiding members as the airbag is deployed. Each of the guiding members are attached to the child seat at their respective ends. A top end of each guiding member is attached to a top portion of the seat back of the child seat. A lower end of each respective guiding member is attached to a side wall portion of the seatback of the child seat. This arrangement allows the two opposing end portions of the airbag to slide along the two guiding members during the inflation and deployment of the airbag. This arrangement further allows the airbag to assume an intended shape relative to the seated occupant when in the inflated condition. In this respect, the guiding members can be said to act as a compliment to other shape-defining features of the airbag such as tethers. The sliding action of the airbag along the guiding members can be said to be driven by the pressure increase of the airbag during its inflation. When in the inflated condition, the guiding members act as anchoring portions for the two opposing end portions of the airbag to the seat back. In so, the respective side wall portions of the airbag can protect the seated occupant from loose items having a lateral trajectory.

The guiding members may be wires or bars. The guiding members may be rigid. Alternatively, the guiding members may be flexible.

The guiding members may have a curved extension. The guiding members may have an extension corresponding to the shape of the respective side wall portions of the seat back of the child seat. This applies no matter if the guiding members are rigid or flexible. As an example, should the side wall portions of the seat back of the child seat be straight, the guiding members may also be provided straight. Correspondingly, should the side wall portions of the seat back of the child seat have a curved extension, the guiding members may also have a curved extension. If the guiding members are flexible, they may naturally adapt to the shape of the side wall portion of the seat back of the child seat. Should the guiding members be rigid, they may be provided with an extension corresponding to the shape of the side wall portion of the seat back of the child seat. This ensures that no gap is formed between the airbag and the seat back through which loose items could pass. The guiding members may be spaced away from the side wall portion of the seat back of the child seat except at their respective fastening positions. This is to ensure a free sliding path of the two opposing side portions of the airbag attached thereto.

The airbag may be slidingly connected to the respective guiding member by loops or eyelets distributed along the two opposing end portions of the airbag. Loops may be part of a one-piece woven structure (OPW) of the airbag. Alternatively, they may be sewn onto the respective end portions of the airbag. The airbag may be a sewn airbag or a one-piece woven structure.

As another alternative, eyelets may be provided to the airbag. In a yet another alternative, eyelets may be provided to a piece of a material which is then sewn onto the respective end portions of the airbag.

The skilled person realizes that a combination of these two options may be applied to the airbag.

The number of loops or eyelets provided to the airbag are chosen such that the airbag will slide smoothly along the guiding members during inflation and deployment. Also, the number of loops or eyelets provided to the airbag may be chosen such that the formation of gaps between the airbag and the side wall portion of the child seat is limited.

Hence, the number of loops or eyelets and their distribution along the two opposing end portions of the airbag is dependent on the curvature of the guiding members which in turn is dependent on the shape of the side wall portions of the child seat. The number of loops and/or eyelets should also be adapted to the intended sliding length of the guiding members during deployment of the airbag.

As a non-limiting example, should the guiding members have a straight or C-shape longitudinal extension, three loops or eyelets may be sufficient to inhibit the formation of gaps and to allow a smooth sliding movement. In other applications, four or more loops or eyelets may be needed to limit the formation of gaps between the airbag and the child seat.

The airbag may be centrally arranged in a rolled and/or folded condition in a top portion of the seat back. At least the opposing edges may be folded in a zig-zag pattern. When in the rolled and/or folded condition, the loops or eyelets may be arranged in the vicinity of each other at an upper end of the respective guiding members. Then, when in the inflated condition, and after the airbag has deployed by performing a sliding action along the guiding members, the loops or eyelets will be distributed at a distance from one another along their repetitive guiding members.

The airbag may in an inflated and deployed condition comprise two opposing side wall portions, a skull portion and a facial portion, wherein the skull portion and the facial portion extend between and interconnect the two opposing side wall portions. The two side wall portions, the skull portion and the facial portion do together form an encapsulating hood as seen in a condition when the airbag is inflated and fully deployed.

In some embodiments, the different portions of the airbag may be described as cells. The cells may be formed by seams between a first and a second fabric layer of the airbag. The seams may be sewn or interwoven seams. Each portion of the airbag may be constituted by one cell. In other embodiments one or more portions of the airbag may be constituted by two or more cells. In the event of two or more cells, it is preferred that the cells are arranged in fluid communication with each other. This is beneficial as it allows all portions of the airbag to be inflated simultaneously by one single inflator. The seams define the shape of the airbag. In some embodiments the shape of the airbag is further defined by tethers. Seams, tethers or a combination of the two may be used to shape the airbag into an encapsulating hood comprising two opposing side wall portions, a skull portion and a facial portion.

The seams and/or tethers may extend across the airbag from one opposing end portion to the other. The seams and/or tethers may extend from one side of the airbag to the other between points provided with loops or eyelets.

The different portions of the airbag may be configured to have different thicknesses when inflated. As a non-limiting example, it may be beneficial to have a greater thickness in the skull portion of the airbag. The design of the thicknesses of the different portions of the airbag may be made based on the intended placement of the child seat in the vehicle. For example, a child seat intended to be placed to the right in a vehicle compartment may have its airbag designed to have a right-hand sidewall portion which is thicker than its left-hand sidewall portion in order to better protect the occupant from collision from the right. Correspondingly, a child seat intended to be placed to the left in the vehicle compartment may have its left-hand sidewall portion designed to be thicker than its right-hand sidewall portion.

An inflation of the airbag may cause a rupture of rupture seams that are arranged in the top portion of the seat back and in two opposing side portions of the seat back along a longitudinal extension of the respective guiding member, whereby the two opposing side walls of the airbags are allowed to slide along a respective guiding member as the airbag inflates. The rupture of the rupture seams provides a continuous opening, allowing the entire airbag to leave its rolled and/or folded configuration in the top portion of the seat back and to freely slide along the guiding members during deployment.

The child seat may be a stationary child seat or a removable child seat.
The design and functionality of the child seat as such has been thoroughly described above.

According to another aspect, the invention refers to an inflatable airbag arrangement to be used as a safety system in a child seat, the arrangement comprising:
an inflatable airbag comprising two opposing side wall portions, a skull portion and a facial portion, wherein the skull portion and the facial portion extend between and interconnect the two opposing side wall portions; and
wherein two opposing end portions of the inflatable airbag each comprises loops or eyelets that are distributed along the respective end portion; and wherein the loops or eyelets are configured to slidingly connect the inflatable airbag to a pair of guiding members.

The inflatable airbag may be arranged in a folded and/or rolled condition.

The functionality and advantages of the airbag as such have been thoroughly discussed above in the context of the child seat. These arguments are equally applicable to an inflatable airbag arrangement as a stand-alone product to be integrated in a child seat. Hence, to avoid undue repetition, reference is made to the sections above.

The inflatable airbag arrangement may further comprise a pair of guiding members, wherein the loops or eyelets slidingly connect the inflatable airbag to the pair of guiding members. The airbag slidingly connected to a pair of guiding members may be provided as a pre-assembled kit to be mounted to a child seat.

The inflatable airbag arrangement may be configured to be centrally arranged in a rolled and/or folded condition in a top portion of a seat back of a child seat and each guiding member may be configured to be arranged in a respective side wall portion of a seat back of the child seat.

The inflatable airbag arrangement may further comprise an inflator.

According to yet another aspect, the invention refers to the use of the inflatable airbag arrangement according to the above in a child seat.

Further objects and advantages of the present invention will be obvious to a person skilled in the art reading the detailed description given below describing different embodiments.

### Brief description of the drawings

The invention will be described in detail with reference to the schematic drawings.
Fig. 1A discloses, highly schematically, a side view of a child seat with a safety system in a condition where the airbag is in a folded/rolled-up condition.
Fig. 1B discloses, highly schematically, a front view of a child seat with a safety system in a condition where the airbag is in a folded/rolled-up condition.
Fig. 2A discloses, highly schematically, a side view of a child seat with a safety system in a condition where the airbag is inflated and fully deployed.
Fig. 2B discloses, highly schematically, a front view of a child seat with a safety system in a condition where the airbag is inflated and fully deployed.

### Detailed description

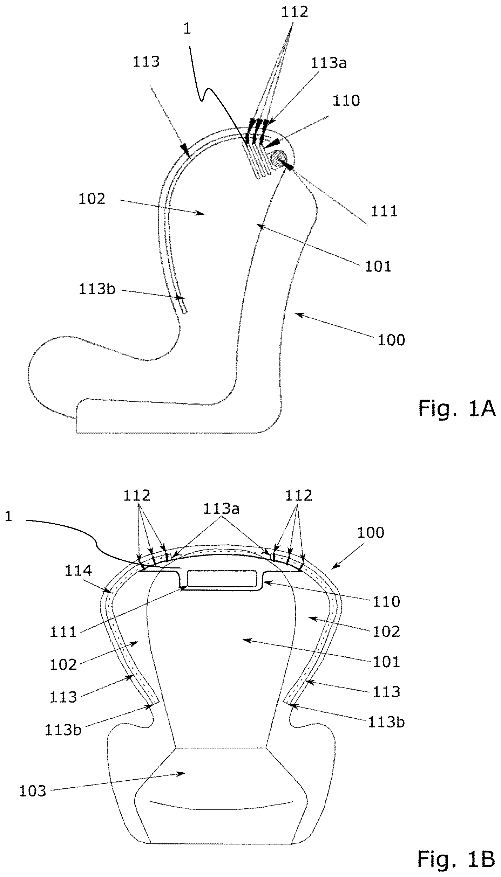

Starting with Figs. 1A and 1B, one embodiment of a child seat 100 with a safety system comprising an inflatable airbag arrangement 1 is disclosed. The inflatable airbag arrangement 1 is disclosed highly schematically in its folded/rolled-up condition and as mounted to the child seat 100. The child seat 100 comprises a seating portion 103, a seat back 101, and two opposing side wall portions 102 extending from the seat back 101. The inflatable airbag arrangement 1 comprises an inflatable airbag 110 and a pair of guiding members 113. Also, an inflator 111 is connected to the airbag. The inflator 111 is centrally arranged in a top portion of the seat back 101 and hence in an upper edge of the airbag as seen in a condition when the airbag arrangement 1 is mounted to the child sea . The airbag 110 is centrally arranged in a rolled and/or folded condition in a top portion of the seat back 101. The airbag 110 is arranged in fluid connected with the inflator 111. Hence, the airbag 110 will be inflated and deployed as the inflator 111 is activated.

The respective guiding members 113 are arranged in a respective side wall portion 102 of the seat back 101 of the child seat 100. A top end 113a of each guiding member 113 is attached to a top portion of the seat back 101. A lower end 113b of each respective guiding member 113 is attached to a respective side wall portion 102 of the seatback 101. The guiding members 113 have a curved extension corresponding to the shape of the side wall portions 102 of the seat back 101.

Two opposing end portions of the airbag 110 are slidingly connected to a respective guiding member 113. The airbag 110 is thereby allowed to perform a sliding action along the pair of guiding members 113 upon the inflation of the airbag. The sliding connection to the respective guiding member 113 is achieved by loops or eyelets 112.

The guiding members 113 are spaced away from the side wall portions 102 of the seat back 101 except at their respective top and lower ends 113a and 113b. The spacing away, ensures a free sliding path of the loops or eyelets 112 along the guiding members 113.

When in the rolled and/or folded condition, the loops or eyelets 112 are arranged in the vicinity of each other at an upper end of the respective guiding members 113. This may be achieved by at least the opposing ends of the airbag being folded in a zig-zag pattern.

The loops/eyelets 112 may be said to be stacked next to one another towards the top ends 113a of the guiding members 113.

The airbag arrangement 1 may be provided as a kit comprising the airbag 110 and the guiding members 113, where the airbag is slidingly mounted to the guiding members by means of the loops or eyelets 112.

A rupture seam 114 is arranged in the top portion of the seat back 101 and in the two opposing side wall portions 102 of the seat back 101 along a longitudinal extension of the respective guiding members 113. The rupture seams 114 are configured to break during an inflation of the airbag 110 and thereby provide a continuous opening in the fabric of the child seat 100. The continuous opening allows the entire airbag 110 to leave its rolled and/or folded configuration in the top portion of the seat back 101 and to slide freely along the guiding members 113 as the airbag 110 is inflated and deployed.

The disclosed arrangements allow the two opposing end portions of the airbag 110 to slide along the two guiding members 113 during the inflation of the airbag 110. Worded differently, the airbag 110 is upon inflation and deployment slidingly guided along the pair of guiding members 113. This arrangement further allows the airbag 110 to assume an intended shape relative to the seated occupant when in the inflated condition as will be described later. In this respect, the guiding members 113 can be said to act as a shape defining feature of the airbag 110.

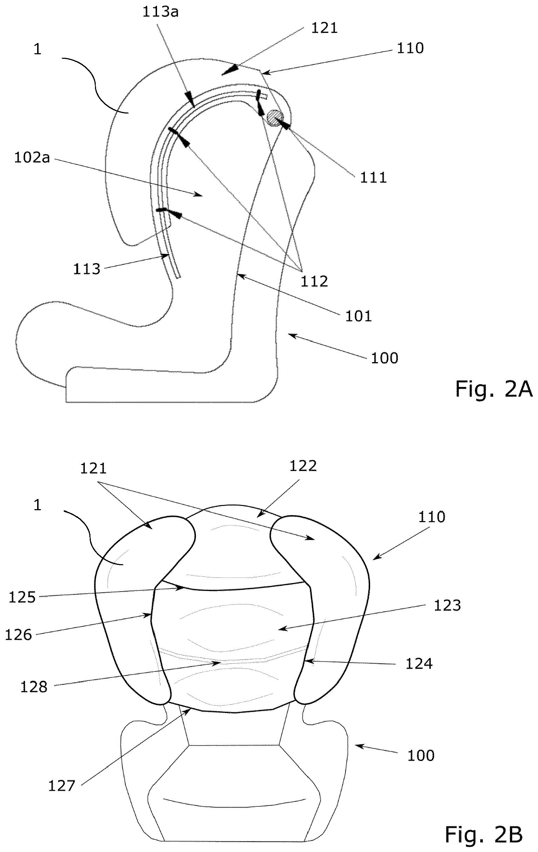

Now, turning to Fig. 2A, the disclosed embodiment is shown in its inflated and deployed condition. After the airbag 110 has deployed by performing a sliding action along the guiding members 113, the loops or eyelets 112 can be seen as being distributed at a distance from one another along their repetitive guiding members 113. When in the inflated and deployed condition, the guiding members 113 act as anchoring portions for the two opposing end portions of the airbag that is attached thereto via the loops or eyelets 112. In so, the respective side wall portions of the airbag 121 form protections protecting the seated occupant from loose items having a lateral trajectory.

Now turning to Fig. 2B which discloses the airbag 110 in an inflated condition wherein the airbag 110 comprises two opposing side wall portions 121, a skull portion 122 and a facial portion123. The skull portion 122 and the facial portion 123 extend between and interconnect the two opposing side wall portions 121.

The different portions of the airbag 110 may be described as cells. The cells are separated by seams 124, 125, 126, 127 between a first and a second (not shown) fabric layer of the airbag 110. Each portion of the airbag 110 in the present embodiment is constituted by one cell. The skilled person realizes that any portion may be constituted by two or more cells. The seams 124, 125, 126, 127 dividing the cells are discontinuous such that the cells are left in fluid communication with one another. This allows all portions of the airbag 110 to be inflated simultaneously by one single inflator.

The seams 124, 125, 126, 127 define the shape of the airbag 110. The shape of the airbag 110 may further be defined by one or more tethers 128. The seams can be said to limit the distance between the first and the second fabric layer of the airbag 110. Meanwhile, the one or more tethers 128 limit and control the bulging of the airbag when in its inflated condition. The seams 125, 127 and tethers 128 may each extend from one side of the airbag 110 to the other between points provided with loops or eyelets 112.

The child seat 100 may be a stationary child seat or a removable child seat.

The inflator 111 may be connected to a non-disclosed ECU (Electronic Control Unit) of a vehicle. The ECU may in turn be connected to one or more sensors in the vehicle. This is all well known in the art and not further discussed.

It is realized by a person skilled in the art that features from various embodiments disclosed herein may be combined with one another to provide further alternative embodiments.

## Claims

1. A child seat with a safety system comprising:
an inflator (111);
an inflatable airbag (110); and
a pair of guiding members (113);
wherein the pair of guiding members (113) are arranged in a respective side wall portion (102) of a seat back (101) of the child seat (100), and wherein two opposing end portions of the airbag are slidingly connected to a respective guiding member (113) such that the airbag (110) is allowed to perform a sliding action along the pair of guiding members (113) upon the inflation of the airbag (110).

2. The child seat according to claim 1, wherein the guiding members (113) are wires or bars.

3. The child seat according to claim 2, where in the guiding members (113) have a curved extension.

4. The child seat according to any of the preceding claims, wherein the airbag (110) is slidingly connected to the respective guiding member (113) by loops or eyelets (112) distributed along the two opposing end portions of the airbag (110).

5. The child seat according to claim 1, wherein the airbag (110) is centrally arranged in a rolled and/or folded condition in a top portion of the seat back (101).

6. The child seat according to any of the preceding claims, wherein the airbag (110) in an inflated and deployed condition comprises two opposing side wall portions (121), a skull portion (122) and a facial portion (123), wherein the skull portion (122) and the facial portion (123) extend between and interconnect the two opposing side wall portions (121).

7. The child seat according to any of the preceding claims, wherein an inflation of the airbag (110) causes a rupture of rupture seams (114) that are arranged in the top portion of the seat back (101) and in two opposing side portions (102) of the seat back (101) along a longitudinal extension of the respective guiding members (113), whereby the two opposing side walls (121) of the airbag are allowed to slide along a respective guiding member (113) as the airbag (110) inflates.

8. The child seat according to any of the preceding claims, wherein the child seat (100) is a stationary child seat or a removable child seat.

9. An inflatable airbag arrangement to be used as a safety system in a child seat, the arrangement (1) comprising:
an inflatable airbag (110) comprising two opposing side wall portions (121), a skull portion (122) and a facial portion (123), wherein the skull portion (122) and the facial portion (123) extend between and interconnect the two opposing side wall portions (121); and
wherein two opposing end portions (121) of the inflatable airbag each comprises loops or eyelets (112) that are distributed along the respective end portion (121); and wherein the loops or eyelets are configured to slidingly connect the inflatable airbag (110) to a pair of guiding members (113).

10. The inflatable airbag arrangement according to claim 9, further comprising a pair of guiding members (113), wherein the loops or eyelets slidingly connect the inflatable airbag (110) to the pair of guiding members (113).

11. The inflatable airbag arrangement according to claim 9 or 10, wherein the inflatable airbag (110) is configured to be centrally arranged in a rolled and/or folded condition in a top portion of a seat back (101) of a child seat and wherein each guiding member (113) is configured to be arranged in a respective side wall portion (102) of a seat back (101) of the child seat (100).

12. The inflatable airbag arrangement according to any of claims 9-11, further comprising an inflator (111).

13. Use of an inflatable airbag arrangement according to any of claims 9-12 in a child seat.
